**Europäisches Patentamt**

**European Patent Office**

**Office européen des brevets**

(19)

(11) Publication number : **0 414 459 B1**

(12) # EUROPEAN PATENT SPECIFICATION

(45) Date of publication of patent specification :
24.05.95 Bulletin 95/21

(51) Int. Cl.⁶ : **G03G 15/20**

(21) Application number : **90309083.5**

(22) Date of filing : **20.08.90**

(54) **Fixing roll used for electrophotography and manufacturing method thereof.**

(30) Priority : **24.08.89 JP 215997/89**

(43) Date of publication of application :
**27.02.91 Bulletin 91/09**

(45) Publication of the grant of the patent :
**24.05.95 Bulletin 95/21**

(84) Designated Contracting States :
**DE FR GB IT NL**

(56) References cited :
**EP-A- 0 302 517
JP-A-57 043 892
Derwent Publications Ltd., London, GB;
DATABASE WPIL, accession no. 86-222188,
week 8634
PATENT ABSTRACTS OF JAPAN, vol. 12, no.
203 (P-715)(3050), 11 June 1988 & JP-A-634287**

(56) References cited :
**PATENT ABSTRACTS OF JAPAN, vol. 10, no.
241 (P-488)(2297), 20 August 1986 & JP-
A-6172273
PATENT ABSTRACTS OF JAPAN, vol. 12, no.
97 (P-682)(2944), 30 March 1988 & JP-
A-62231281**

(73) Proprietor : **NITTO KOGYO CO LTD
5-27-3 Shinbashi
Minato-ku, Tokyo 150 (JP)**

(72) Inventor : **Kobayashi, Naofumi
2580-13, Denbo 2-chome
Fuji-shi, Shizuoka 417 (JP)**

(74) Representative : **Hepworth, John Malcolm et al
Hepworth Lawrence Bryer & Bizley
Bloxam Court
Corporation Street
Rugby, Warwickshire CV21 2DU (GB)**

**Description**

BACKGROUND OF THE INVENTION

Field of the Invention

The present invention concerns a fixing roll for use in a fixing device of electrophotographic apparatus for fixing toner particles on copy paper by fusion.

Description of the Prior Art

As a fixing roll for electrophotography, there has been used a roll comprising a cylindrical core made of aluminium, iron or stainless steel coated with an easily releasable material, for example, a fluoro resin such as a polytetrafluoroethylene (hereinafter referred to as PTFE resin), or a copolymer of tetrafluoroethylene and perfluoroalkyl perfluorovinyl ether (hereinafter referred to as PFA resin).

Such a fixing roll is opposed under pressure to a press roll coated with a silicone rubber or fluoro rubber to constitute a fixing device. Copy paper is passed between a heated fixing roll and a press roll to fuse powdery toner images formed thereon by means of heat and pressure and to fix them onto the copy paper.

A fixing roll having a coating layer of fluororesin is manufactured by coating a powder or a liquid dispersion of the fluororesin on the surface of the core and fusing it by sintering at a temperature of 360 to 400°C. However, the thickness of the coating layer tends to be irregular because of unevenness left after the coating. The irregularity in the thickness of the fluoro resin layer changes the press-contact force upon toner fixing, resulting in deterioration of the quality of the fixed image. Therefore, the fluororesin layer after sintering is ground into a predetermined thickness by using a sand paper or grinding stone, which also improves the smoothness of the surface.

However, such surface grinding involves a problem of causing deep scratches and taking many working steps. Accordingly, it has been proposed to smooth the surface using a press roll instead of by grinding it (refer to Japanese Patent Laid-Open Sho 57-43892).

The fixing roll smoothed at the surface by the conventional method as described above is capable of improving the quality of the fixed image. However, it is not always effective for improvement of the offset phenomenon, that is, the phenomenon of toner particles fused upon fixing of the toner image being deposited on the fixing roll and being transferred to and contaminating the subsequent copy paper.

The offset phenomenon is generally classified into a so-called high temperature offset and a so-called low temperature offset. The high temperature offset is caused by the deposition of the fused toner on the fixing roll, while the low temperature offset is caused by the deposition of unfused toner particles on the fixing roll. The type of offset which occurs depends on the distribution of the surface temperature of the fixing roll, drop in temperature upon paper passage, toner characteristics, etc. Accordingly, it is required for the fixing roll that the temperature for causing the high temperature offset is higher and the temperature of causing the low temperature offset is lower. However, the fixing roll obtained by the above-mentioned conventional method involves a problem that the temperature ranges for causing high temperature offset and for causing low temperature offset are close to each other and the non-offset temperature range is narrow.

Patent abstracts of Japan, Vol. 12, No. 203 (P-715) [3050], June 11, 1988 ( an abstract of JP-A-63-4287) discloses a fixing roller made by coating a core of the fixing roller with a fluororesin to form a coating layer 30 μm thick. The coating layer is contacted under pressure by a press roll to smooth the surface, before being baked at a temperature of 380-400°C.

Patent Abstracts of Japan, Vol. 12, No. 97 (P-682) [2944], March 30, 1988 (an abstract of JP-A-62-231281) describes a method of making a fixing roller in which an elastic body is cured and stuck on the outer surface of a core. The surface of the elastic body is ground and coated with a dispersion of PTFE, which is then dried. The PTFE is melted and contacted with a heating body under pressure while rotating the roller.

Patent Abstracts of Japan, Vol. 10, No. 355 (C-388) [2411], November 24, 1986 and Database WPIL of Derwent Publications Ltd, accession no. 86-2221888, week 8634 (both abstracts of JP-A-61-153179) disclose manufacture of a fixing roller in which a core is successively provided with an elastic layer of fluororubber and fluororesin coating. The fluororesin is sintered, abraded and sintered again.

EP-A-302517 describes a fixing roller having a core around which is disposed an elastic layer. The elastic layer is coated with a fluororesin. During production of the roller, the elastic layer is coated with a fluororesin dispersion. The fluororesin layer is heated to 380°C and thereby sintered.

## OBJECT OF THE INVENTION

It is, accordingly, an object of the present invention to provide an improved fixing roll having a high fixing image quality and also having a wide non-offset temperature range, as well as a method of manufacture thereof.

## SUMMARY OF THE INVENTION

The foregoing object of the present invention can be attained in a fixing roll for electrophotography in which a fluoro resin layer with a surface roughness Rz of not greater than 3.5 μm, a gloss of not greater than 50% and an angle of contact with water of not less than 115° is coated on the surface of a core roll.

The fixing roll according to the present invention can be manufactured by coating a fluororesin paint on the surface of a core roll, to form a coating layer, drying the coating layer while preventing sintering thereof, smoothing the surface of the coating roll by rotating the core roll while urging a press roll having a mirror finished metal surface against the core roll under a pressure of 1 to 20 kgf/cm$^2$ while causing the press roll to rotate and while axially moving the press roll, and heating the coating layer to form a fused fluororesin layer.

The core used in the present invention is, preferably, a hollow cylindrical shape, in which a heat-generating member can be mounted.

There is no particular restriction for the fluoro resin paint coated on the core. A dispersion of PTFE resin, PFA resin or a blend thereof in a liquid medium is preferably used. An organic or inorganic filler, etc may be blended with such a paint as required. As the filler, there can be used fibrous or finely powdered filler, for example, carbon, potassium titanate, metal oxide, ceramic, glass or metal. A material suitable for providing a desired property such as charge-elimination or abrasion-resistance can be selected and blended.

Generally, it has been known that an excellent charge-eliminating property can be provided by incorporating 3 to 8% by weight of carbon in the surface resin layer of a fixing roll. In the present invention, however, excellent charge-eliminating performance can be obtained by mixing a much smaller amount of carbon than described above, that is, about from 0.5 to 3% by weight and, in particular, from 0.5 to 1% by weight.

The fluororesin layer is coated on a hollow core coated with a primer by, for example, spray coating and then dried at a temperature from room temperature to about 100°C for 30 min to one hour, to form a dried coating layer of the fluororesin. Since the dried coating layer of the fluororesin is not sintered and fluororesin particles are merely overlapped to each other, there is an unevenness on the surface profiling the shape of the particles, which tend to drop upon applying strong rubbing.

The dried fluororesin coating layer thus formed on the core is smoothed. For such smoothing, there can be mentioned, for example, a method of urging a press roll made of metal, which is mirror finished at the surface, against the rotating core under a pressure of about 1 to 20 kgf/cm$^2$ and causing the roll to be rotated, crushing the dry fluororesin layer while axially moving the press roll, for example, at a rate of 2 cm/sec, thereby smoothing the surface into a mirror-finished state. According to this method, since the resin layer can be easily smoothed under a much lower pressing force, unlike the case of smoothing the fluororesin layer after melting by sintering, there is no disadvantage such as distorting the core.

The dry fluororesin layer smoothed as described above can be converted into a smooth fluororesin layer free from damage by sintering at a temperature, for example, from 360 to 400°C for a time of, for example, from 10 min to 1 hour. The resin layer has a mat appearance and a gloss of not greater than 50%. In addition, the surface roughness is substantially equal to that obtained by the conventional method of grinding the surface after sintering or mirror finishing the surface with the press roll, that is, a ten point average roughness Rz of less than 3.5 μm.

The feature of the fixing roll according to the present invention thus obtained lies in a particularly large angle of contact with water at the surface of the fluororesin layer. That is, when a water droplet is placed on the surface of the fixing roll in accordance with the present invention and the angle of contact is measured, it shows an angle of contact of not less than 115°. On the other hand, that value is not greater than 100° for a surface smoothed fluororesin layer of the prior art.

The fixing roll used for electrophotography according to the present invention having the foregoing characteristics has a fluororesin layer of high density obtained by smoothing its surface under pressure and then sintering it for fusion bonding. The roll is free from the offset phenomenon and excellent in abrasion resistance and durability.

## DESCRIPTION OF THE PREFERRED EMBODIMENTS OF THE INVENTION

### Example 1

After coating a primer (EK 1909 BKN, manufactured by Daikin Kogyo Co) on a hollow core 30 mm in diameter and 300 mm in length, a solution of PTFE resin (ED 4300 CRN, manufactured by Daikin Kogyo Co) was coated thereon. After drying at 80°C for 30 min to form a dry fluororesin coating layer, a metal press roll having a mirror-finished face was brought into contact with the core under a pressure of 6 kgf/cm$^2$. Then, the core was rotated and the press roll was moved axially at a rate of 2 cm/sec to smooth the dry fluororesin coating layer into a mirror-finished state. The average roughness Rz for 10 points was 2 µm.

The roll was sintered in a sintering furnace at 380°C for 30 min to manufacture a fixing roll having a fluororesin layer of 30 µm thickness.

The ten point average roughness Rz of the thus obtained fixing roll Rz was 2.0 µm.

Further, a halogen light at 580 - 600 nm was applied at an angle of 75° from a gloss meter (ND-KS, VG-107 type, manufactured by Nippon Denshoku Co.) and the gloss of the surface, measured at an angle of the reflected light of 75°, was 9.1%.

Further, a water droplet was placed on the surface and the angle of contact of the fluororesin surface with the water was measured by a contact angle gauge. The measured angle was 118 - 120°.

### Example 2

A fixing roll was manufactured following the procedures of Example 1 except for coating a solution of a PTFE resin (ED4300CRN, manufactured by Daikin Kogyo Co.) mixed with 0.75% by weight of carbon black.

The ten point average roughness Rz was 2.0 µm, the gloss was 4.2% and the angle of contact was 120 to 126°.

### Example 3

A fixing roll was manufactured following the procedures of Example 1 except for coating a solution of a PTFE resin (ED 4300 CRN, manufactured by Daikin Kogyo Co.) mixed with 3% by weight of tin oxide.

The ten point average roughness Rz was 2.0 µm, the gloss was 46.8% and the angle of contact was 118 to 124°.

### Comparative Example 1

After coating a primer (EK 1909 BKN, manufactured by Daikin Kogyo Co.) on a hollow core 30 mm in diameter and 300 mm in length, a solution of a PTFE resin (ED 4300 CRN, Daikin Kogyo Co.) was coated and dried at a temperature of 80°C for about 30 min.

Subsequently, it was sintered at a temperature of 380°C for 30 min and ground with 800 # sand paper to manufacture a fixing roller having a fluororesin layer of 30 µm thickness.

The ten point average roughness Rz of the obtained fixing roll was 1.5 µm and a number of grinding scratches were observed by naked eye. The gloss was 65.7% and the angle of contact was 102°.

### Comparative Example 2

A fixing roll was manufactured following the procedures of Comparative Example 1 except for mixing 0.75% by weight of carbon black to the solution of the PTFE resin (ED 4300 CRN, manufactured by Daikin Kogyo Co.).

The resultant fixing roll had a ten point average roughness Rz of 1.5 µm, gloss or 70.4% and angle of contact of 104 to 106°.

### Comparative Example 3

A fixing roll was manufactured following the procedures of Comparative Example 1 except for mixing 3 % by weight of tin oxide with the solution of PTFE resin (ED 4300 CRN, manufactured by Daikin Kogyo Co.)

The resultant fixing roll had a ten point average roughness Rz of 1.5 µm, gloss of 65.1% and angle of contact of 98 to 102°.

Comparative Example 4

A primer (EK 1909 BKN, manufactured by Daikin Kogyo Co.) was coated on a hollow core 30mm in diameter and 300mm in length and dried at 80°C for 30 min. Subsequently, it was sintered at 380°C for 30 min. Then, the core was rotated in contact with a press roll having a mirror-finished surface under a pressure of about 40 kgf/cm$^2$ and the press roll was moved axially at a rate of 2cm/sec while softening the surface of the fluororesen by means of a heat gun to manufacture a fixing roll having a fluororesin layer of 30 μm thickness.

The resultant fixing roll had ten point average roughness Rz of 1.95 μm and a surface gloss of 69.3%, in which cloudy spots were distributed all over the surface having mirror-like gloss. Further, upon microscopic observation, a plurality of stripe-like flaws caused by the press roll were confirmed.

The angle of contact was 104 to 106°.

Comparative Example 5

A fixing roll was manufactured following the same procedures as those of Comparative Example 4 except for mixing 0.75% by weight of carbon black into a solution of a PTFE resin (ED 4300 CRN, manufactured by Daikin Kogyo Co.).

The thus obtained fixing roll had ten point average roughness Rz of 1.9 μm, gloss of 73.6% and appearance similar to that of Comparative Example 4. The angle of contact was 106 to 108°.

Comparative Example 6

A fixing roll was manufactured following the procedures of Comparative Example 4 except for mixing 3% by weight of tin oxide into a solution of a PTFE resin (ED 4300 CRN, manufactured by Daikin Kogyo Co.).

The thus obtained fixing roll had ten point average roughness Rz of 1.9 μm, gloss of 69.4% and appearance similar to that of Comparative Example 4. The angle of contact was 101 to 104°.

Text Example 1

After incorporating each of the fixing rolls in Examples 1 - 3 and Comparative Examples 1 - 6 into a copying machine and heating to 240°C, the heater was turned off and paper was passed. Then, occurrence of offset phenomenon on the copied image was observed until the temperature at the roll surface had gradually decreased to 130°C. The amount of static charges was measured at the initial stage and after passage of 100 sheets of paper by using Monroe's surface potentiometer. Results are shown in Tables 1 - 3.

## Table 1

|  | Non-offset temperature range | Initial charge (V) | Charge (V) after passage of 100 paper sheets |
|---|---|---|---|
| Example 1 | 180°C − 235°C | −30 − −40 | −300 − −320 |
| Comp. Example 1 | 195°C − 220°C | −30 − −40 | −300 − −350 |
| Comp. Example 4 | 195°C − 225°C | −30 − −40 | −300 − −350 |

Table 2

| | Non-offset temperature range | Initial charge (V) | Charge (V) after passage of 100 paper sheets |
|---|---|---|---|
| Example 2 | 155°C - 230°C | -30 - -40 | -40 - -60 |
| Comp. Example 2 | 165°C - 190°C | -30 - -40 | -100 - -120 |
| Comp. Example 5 | 160°C - 210°C | -30 - -40 | -80 - -100 |

Table 3

| | Non-offset temperature range | Initial charge (V) | Charge (V) after passage of 100 paper sheets |
|---|---|---|---|
| Example 3 | 155°C - 220°C | -30 - -40 | -40 - -60 |
| Comp. Example 3 | 165°C - 180°C | -30 - -40 | -110 - -120 |
| Comp. Example 6 | 165°C - 200°C | -30 - -40 | -110 - -120 |

From the results as described above, it can be seen that the roll according to the present invention shows satisfactory results in view of a wide non-offset temperature range and a charge eliminating performance in any of the cases in which fillers are not incorporated, or carbon or tin oxide is incorporated. Further, from Tables 2,3, in particular, there is a remarkable difference in the charge eliminating effect even though the same amount of the filler is used. It can thus be seen that the property of the filler can be enhanced effectively in the present invention.

Next, the rolls of Example 1 and Comparative Example 1 were immersed at a temperature of 200°C in a silicone oil having a viscosity at a normal temperature of 100 cs for observation of the exfoliation of the fluororesin layer. The roll of Comparative Example 1 showed exfoliation of 10/100 after 216 hours and 40/100 after 240 hours in a score peeling test, whereas the roll of Example 1 showed no exfoliation at all even after a lapse of 300 hours.

Then, the rolls of Example 2 and Comparative Example 2 were incorporated into a copying machine to observe abrasion due to the edges of the copy sheets and the abrasion due to the separating finger. In Example 2, the surface roughness, Rmax, in a portion where the edge portion of copy paper is passed, was 2.5 μm at the initial state and 3.2 μm after passage of 30,000 sheets and in a portion contacted by the separation finger was 3 μm at the initial stage and 1.8 μm after passage of 30,000 sheets. However, in Comparative Example 2, in the portion where the edge of the copy paper is passed, the surface roughness Rmax was 2 μm at the initial stage and 8 μm after passage of 30,000 sheets and in the portion contacted by the separation finger, the surface roughness Rmax was 1.5 μm at the initial state and 5.5 μm after the passage of 30,000 sheets. Thus, the roll of Example 2 shows outstandingly excellent abrasion resistance.

Examples 4 - 6 and Comparative Examples 7 - 8.

Fixing rolls for Examples 4 - 6 were manufactured following the procedures of Example 2 except for changing the amount of carbon black mixed in Example 2 to 0.5, 1 and 3% by weight, respectively.

Further, fixing rolls for Comparative Examples 7 - 8 were manufactured following the procedures of Comparative Example 2 except for changing the amount of carbon black mixed in Comparative Example 2 to 3 and 5% by weight, respectively.

Test Example 2

Occurrence of offset phenomenon in the copied image and the amount of static charges were examined for each of the fixing rolls in Examples 4 - 6 and Comparative Examples 7, 8 using the same methods as those in Test Example 1.

The results are shown in Table 4.

Table 4

| | Non-offset temperature range | Initial charge (V) | Charge (V) after passage of 100 paper sheets |
|---|---|---|---|
| Example 4 | 155°C − 230°C | −30 − −40 | −50 − −70 |
| Example 5 | 155°C − 225°C | −30 − −40 | −30 − −50 |
| Example 6 | 155°C − 220°C | −30 − −40 | −25 − −45 |
| Comp. Example 7 | 155°C − 185°C | −30 − −40 | −50 − −70 |
| Comp. Example 8 | 155°C − 175°C | −30 − −40 | −30 − −50 |

From the results of Table 4, it can be seen that the rolls according to the present invention have a charge-eliminating property equal to or better than that of conventional rolls with a lower carbon content.

The fixing roll used for electrophotography according to the present invention has a wide non-offset temperature range, excellent abrasion resistance and durability to silicone oil. It has the advantage of remarkably improving the effect of fillers for providing electro-conductivity and ease of manufacture.

## Claims

1. A fixing roll for use in electrophotography in which a fluororesin layer having a surface roughness Rz of not greater than 3.5 μm, gloss of not greater than 50% and an angle of contact with water of not less than 115° is coated on an outer surface of a core roll.

2. A fixing roll as defined in claim 1, wherein the fluororesin comprises polytetrafluoroethylene or a copolymer of tetrafluoroethylene and a perfluoroalkyl perfluorovinyl ether, or a blend thereof.

3. A method of manufacturing a fixing roll for use in electrophotography as defined in claim 1, which comprises coating a fluororesin paint on the outer surface of a core roll thereby forming a coating layer thereon, drying the coating layer while preventing sintering thereof, smoothing the surface of the coating layer by rotating the core roll while urging a press roll having a mirror finished metal surface against the core roll under a pressure of 1 to 20 kgf/cm$^2$ while causing the press roll to rotate and while axially moving the press roll, and heating the coating layer to form a fused fluororesin layer.

4. A manufacturing method as defined in claim 3, wherein a liquid dispersion of a fluororesin is used as the fluororesin paint.

5. A manufacturing method as defined in claim 3 or claim 4, wherein the fluororesin comprises polytetrafluoroethylene or a copolymer of tetrafluoroethylene and a perfluoroalkyl perfluorovinyl ether, or a blend thereof.

6. A manufacturing method as defined in any of claims 3 to 5, wherein a fluororesin paint blended with an electro-conductive filler is used.

7. A manufacturing method as defined in any of claims 3 to 6, wherein the coating layer is dried at a temperature of from room temperature to 100°C for a period of from 30 minutes to one hour.

8. A manufacturing method as defined in any of claims 3 to 7, wherein the press roll urged against the core roll is moved axially.

9. The use of a fixing roll as defined in claim 1 or claim 2 in electrophotography.

10. An electrophotography copying machine comprising a fixing roll as defined in claim 1 or claim 2.

**Patentansprüche**

1. Fixierwalze zur Verwendung in der Elektrophotographie, in der eine Fluorharz-Schicht mit einer Oberflächenrauhheit Rz von nicht über 3,5 μm, einem Glanz von nicht über 50 % und einem Kontaktwinkel mit Wasser von nicht über 115° beschichtungsmäßig auf die äußere Oberfläche einer Kernwalze aufgetragen wird.

2. Fixierwalze nach Anspruch 1, worin das Fluorharz Polytetrafluorethylen oder ein Copolymer aus Tetrafluorethylen und Perfluoralkylperfluorvinylether oder eine Mischung daraus umfaßt.

3. Verfahren zur Herstellung einer Fixierwalze zur Verwendung in der Elektrophotographie nach Anspruch 1, welches die Schritte umfaßt, daß man ein Fluorharz-Anstrichmittel beschichtungsmäßig auf die äußere Oberfläche einer Kernwalze aufträgt und dadurch darauf eine Überzugsschicht bildet, die Überzugsschicht trocknet, wobei man deren Sintern verhindert, die Oberfläche der Überzugsschicht durch Rotieren der Kernwalze glättet, während man eine Andruckwalze mit einer spiegelblank polierten Metalloberfläche gegen die Kernwalze mit einem Druck von 1 bis 20 kgf/cm$^2$ drückt, während man veranlaßt, daß die Andruckwalze rotiert, und während man die Andruckwalze in axialer Richtung bewegt, und die Überzugsschicht unter Bildung einer zusammengeschmolzenen Fluorharz-Schicht erhitzt.

4. Herstellungsverfahren nach Anspruch 3, worin eine flüssige Dispersion eines Fluorharzes als Fluorharz-Anstrichmittel verwendet wird.

5. Herstellungsverfahren nach Anspruch 3 oder Anspruch 4, worin das Fluorharz Polytetrafluorethylen oder ein Copolymer aus Tetrafluorethylen und einem Perfluoralkylperfluorvinylether oder eine Mischung daraus umfaßt.

6. Herstellungsverfahren nach einem der Ansprüche 3 bis 5, worin ein Fluorharz-Anstrichmittel verwendet wird, das mit einem elektroleitenden Füllstoff gemischt ist.

7. Herstellungsverfahren nach einem der Ansprüche 3 bis 6, worin die Überzugsschicht bei einer Temperatur von Raumtemperatur bis 100 °C für eine Zeit von 30 min bis eine Stunde getrocknet wird.

8. Herstellungsverfahren nach einem der Ansprüche 3 bis 7, worin die Andruckwalze, die gegen die Kernwalze gedrückt wird, in axialer Richtung bewegt wird.

9. Verwendung einer Fixierwalze nach Anspruch 1 oder Anspruch 2 in der Elektrophotographie.

10. Elektrophotographie-Kopiervorrichtung, umfassend eine Fixierwalze nach Anspruch 1 oder Anspruch 2.


**Revendications**

1. Rouleau de fixage utilisé en électrophotographie dans lequel une couche de résine fluorée présentant une rugosité de surface Rz non supérieure à 3,5 $\mu$m, une brillance non supérieure à 50 % et un angle de contact à l'eau non inférieur à 115° est enrobée sur une surface externe d'un rouleau à noyau.

2. Rouleau de fixage selon la revendication 1, dans lequel la résine fluorée comprend du polytétra-fluoroéthylène ou un copolymère de tétra-fluoroéthylène et d'un éther perfluoro-alkyl- perfluoro-vinyle ou un mélange de ceux-ci.

3. Procédé de fabrication d'un rouleau de fixage pour une utilisation en électrophotographie selon la revendication 1, qui comprend l'enrobage d'une peinture en résine fluorée sur la surface externe d'un rouleau à noyau formant ainsi une couche de revêtement sur celui-ci, le séchage de la couche de revêtement tout en empêchant son frittage, le lissage de la surface de la couche de revêtement en faisant tourner le rouleau à noyau tout en appliquant un rouleau presseur ayant une surface métallique avec un fini de miroir contre le rouleau à noyau sous une pression de 1 à 20 kgf/cm$^2$ tout en faisant tourner le rouleau presseur et tout en déplaçant axialement le rouleau presseur, et le chauffage de la couche de revêtement pour former une couche de résine fluorée fondue.

4. Procédé de fabrication selon la revendication 3, dans lequel une dispersion liquide d'une résine fluorée est utilisée comme peinture en résine fluorée.

5. Procédé de fabrication selon la revendication 3 ou la revendication 4, dans lequel la résine fluorée comprend du polytétra-fluoroéthylène ou un copolymère de tétra-fluoroéthylène et d'un éther perfluoro-alkylperfluoro-vinyle, ou un mélange de ceux-ci.

6. Procédé de fabrication selon l'une quelconque des revendications 3 à 5, dans lequel une peinture en résine fluorée mélangée avec une charge électro-conductrice est utilisée.

7. Procédé de fabrication selon l'une quelconque des revendications 3 à 6, dans lequel la couche de revêtement est séchée à une température allant de la température ambiante jusqu'à 100°C pendant une durée de 30 minutes à une heure.

8. Procédé de fabrication selon l'une quelconque des revendications 3 à 7, dans lequel le rouleau presseur appliqué contre le rouleau à noyau est déplacé axialement.

9. Utilisation d'un rouleau de fixage selon la revendication 1 ou la revendication 2 en électrophotographie.

10. Machine à copier électrophotographique comprenant un rouleau de fixage selon la revendication 1 ou la revendication 2.